# EUROPÄISCHE PATENTANMELDUNG

(11) **EP 0 578 346 A1**
(43) Veröffentlichungstag der Anmeldung: **12.01.1994**
(21) Anmeldenummer: 93250198.4
(22) Anmeldetag: 07.07.1993
(51) Int. Cl.: B66C 1/02, B65G 47/91

(54) **Greifvorrichtung**

(30) Priorität: 08.07.1992 DE 4222355; 23.03.1993 GB 9305942
(71) Anmelder: MANNESMANN Aktiengesellschaft, D-40027 Düsseldorf (DE); J. Schmalz GmbH, D-72293 Glatten (DE)
(72) Erfinder: Schmalz, Kurt, Dr., D-72293 Glatten (DE)
(74) Vertreter: Meissner, Peter E., Dipl.-Ing.

(57) **Zusammenfassung**

Bei einer Greifvorrichtung (1) zum Greifen, insbesondere Ansaugen, und Anheben von ein oder mehrere Gegenstände umfassenden Stückgut mit einem auf das Stückgut aufsetzbaren Saugkasten (2), der mit einer Unterdruckeinrichtung verbindbar ist und der an seinen Seitenrändern luftundurchlässige Vorhänge (4) aufweist, wird eine einfache Handhabung des Stückguts dadurch erzielt, daß die Lage wenigstens eines Vorhangs (4) eines Seitenrandes horizontal und/oder vertikal veränderbar ist.

## Beschreibung

Die Erfindung betrifft eine Greifvorrichtung zum Greifen, insbesondere Ansaugen, und Anheben von Stückgut mit einem auf das Stückgut aufsetzbaren Saugkasten, der mit einer Unterdruckeinrichtung verbindbar ist, und der an seinen Seitenrändern luftundurchlässige Vorhänge aufweist.

Eine derartige Greifvorrichtung ist z.B. aus der DE 29 21 005 A1 bekannt, und dient zur Handhabung von Kartons, Paketen usw. Diese bekannte Greifvorrichtung weist einen Saugkasten auf, der auf den bzw. die Gegenstände, die das Stückgut darstellen, aufgesetzt wird. Über die Unterdruckeinrichtung wird der Innenraum des Saugkastens einem Unterdruck ausgesetzt, so daß das Stückgut, das wie bereits erwähnt aus einem oder mehreren Gegenständen bestehen kann, angesaugt wird. Zur seitlichen Abdichtung weist der Saugkasten Vorhänge auf, die sich an das Stückgut anlegen. Das Stückgut kann mit dieser Greifvorrichtung angehoben und problemlos manipuliert werden. Als nachteilig hat sich herausgestellt, daß die Größe des Saugkopfes, der in der Regel rechteckförmig ausgebildet ist, der Größe des zu handhabenden Stückguts angepaßt sein muß, da sich sonst der Vorhang seitlich nicht an die Seitenwände des Stückguts anlegen und die Greifvorrichtung nicht gegen Falschluft abdichten kann. Es sind also eine Vielzahl von verschieden ausgebildeten Greifvorrichtungen erforderlich, um Gegenstände aller Art handhaben zu können.

Der Erfindung liegt daher die Aufgabe zugrunde, eine Greifvorrichtung derart auszubilden, daß Stückgut mit unterschiedlichen Abmessungen problemlos gehandhabt werden kann.

Diese Aufgabe wird erfindungsgemäß dadurch gelöst, daß die Lage wenigstens eines Vorhanges eines Seitenrandes horizontal und/oder vertikal veränderbar ist.

Durch die Veränderung der horizontalen und/oder vertikalen Lage bzw. Länge wenigstens eines Vorhangs des Seitenrandes wird die Möglichkeit geschaffen, daß die Breite der Stückgut aufnehmenden Fläche der Greifvorrichtung und/oder der Höhe an die Abmessungen des Stückguts angepaßt werden kann. Auf diese Weise können Gegenstände unterschiedlicher Abmessungen ergriffen und angehoben werden, ohne daß hierfür angepaßte Greifvorrichtungen eingesetzt werden müssen, da die Anpassung der erfindungsgemäßen Greifvorrichtung an andere Größen durch die Verschiebung des Vorhangs erfolgt. Dieser Vorhang wird solange verschoben, bis er an der Seitenfläche des anzuhebenden Gegenstands anliegt und den Saugkasten nach außen abdichtet.

Weitere Vorteile, Merkmale und Einzelheiten ergeben sich aus den weiteren Ansprüchen und der nachfolgenden Beschreibung, in der unter Bezugnahme auf die Zeichnung besonders bevorzugte Ausführungsbeispiele im einzelnen beschrieben sind. Dabei zeigen:
- Figur 1: eine schematische Wiedergabe der erfindungsgemäßen Greifvorrichtung im Längsschnitt;
- Figur 2: eine Ansicht in Richtung des Pfeils II gemäß Figur 1 auf die Unterseite der Greifvorrichtung.
- Figur 3: eine schematische Wiedergabe einer weiteren Ausführungsform eines mit einer einen Strömungswiderstand erzeugenden Einrichtung bestückten Saugkastens im Längsschnitt; und
- Figur 4: eine Draufsicht auf die Ausführungsform der Figur 3.

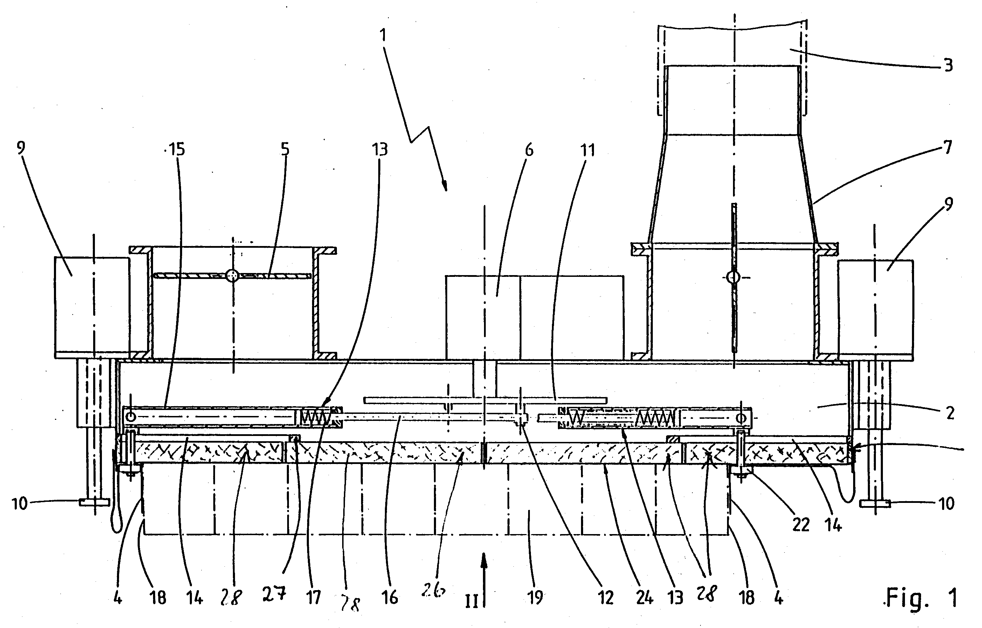

Die Figur 1 zeigt eine insgesamt mit 1 bezeichnete Greifvorrichtung, die zum Ansaugen und Anheben von Paketen, Kartons, Säcken, Dosen usw. dient. Die Greifvorrichtung 1 besitzt einen Saugkasten 2, an dem ein Unterdruckschlauch 3 festgelegt ist. Dieser Unterdruckschlauch 3 steht mit einer nicht gezeigten Unterdruckeinrichtung in Verbindung, über die der Innenraum des Unterdruckschlauchs 3 und der Innenraum des Saugkastens 2 mit einem Unterdruck versorgt wird. An der Unterseite des Saugkastens 2 sind Vorhänge 4 vorgesehen, die lediglich mit ihrer Oberkante mit dem Saugkasten 2 in Verbindung stehen. Die Vorhänge 4 sind z.B. aus einem flexiblen Material, wie Silikon oder einem anderen Kunststoff hergestellt und besitzen eine Dicke von 0,5-5 mm, insb. 1 mm. Die Vorhänge 4 können auch als teleskopierbare Platten ausgebildet sein, die ineinandergeschoben oder auseinandergezogen werden können. Die Platten können aus Metall oder Kunststoff bestehen. Der Saugkasten 2 besitzt eine rechteckförmige Grundfläche, die geringfügig größer als das Euro-Palettenmaß von 800 mm x 1200 mm ist. Hierdurch wird gewährleistet, daß der Saugkasten 2 mit Sicherheit auf eine palettierte Stückgutlage 19 derart aufsetzbar ist, daß die seitlichen Vorhänge 4 die Seitenwände 18 der Stückgutlage 19 umgreift. Die oberste Stückgutlage 19 befindet sich bei aufgesetztem Saugkasten 2 in dessen Innenraum. Wird mittels der Unterdruckeinrichtung ein Unterdruck erzeugt, so wird die oberste Stückgutlage 19 vom Saugkasten 2 angesaugt. Außerdem legen sich die Vorhänge 4 an den Seitenflächen 18 der Stückgutlage 19 an und dichten somit den Innenraum des Saugkasten 2 nach außen ab, so daß im Innenraum des Saugkastens 2 ein Unterdruck aufgebaut werden kann.

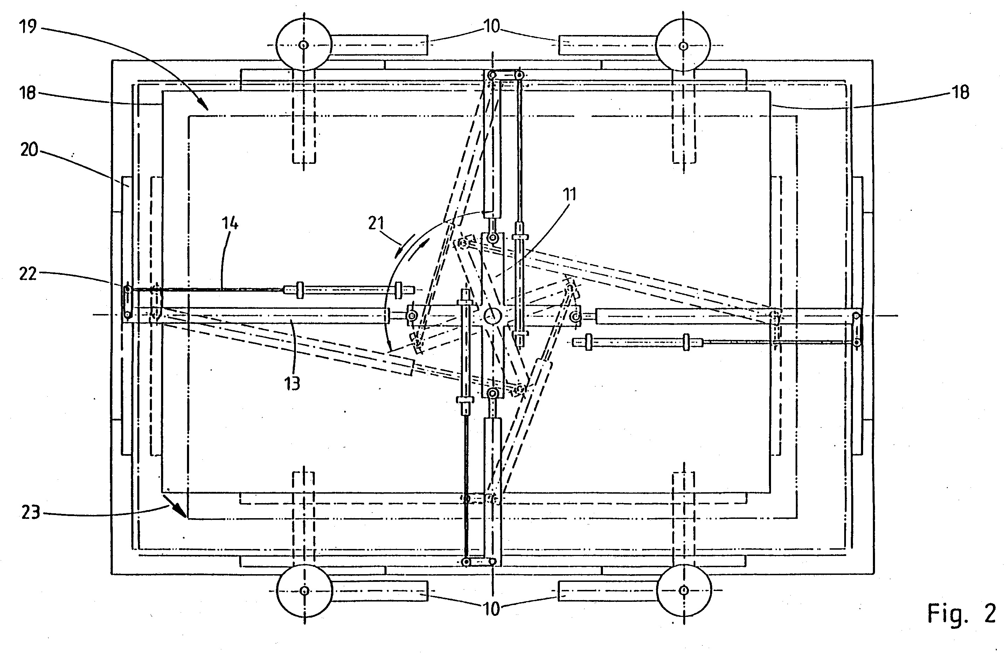

In der Figur 1 ist außerdem eine Belüftungsklappe 5 in geschlossener Lage erkennbar. Außerdem ist ein zentraler Antrieb 6 wiedergegeben, über den die horizontale Lage der Vorhänge 4 verändert werden kann. Der Unterdruckschlauch 3 ist an einem mit dem Gehäuse des Saugkastens 2 verbundenen Saugstutzen 7 angeschlossen. Innerhalb des Saugstutzens 7 befindet sich eine Saugklappe 8, die eine Offenstellung einnimmt. Seitlich am Gehäuse des Saugkastens 2 sind Antriebe 9 für Palettengreiffinger 10 vorgesehen, mit denen leere Paletten ergriffen und über die Greifvorrichtung 1 ebenfalls angehoben werden können. Im Innenraum des Saugkastens 2 befindet sich unterhalb des zentralen Antriebs 6 ein Antriebsstern 11, der in Figur 2 deutlicher wiedergegeben ist. An diesem Antriebsstern 11 sind über Bolzen 12 Manipulatoren 13 befestigt, über die die Vorhänge 4 horizontal bewegt werden können. Diese Vorhänge 4 sowie das den Vorhängen 4 zugewandte Ende der Manipulatoren 13 sind in Führungsschienen 14 gelagert, die eine Parallelverschiebung der Vorhänge sicherstellen. Außerdem sind die Vorhänge 4 drehbar bzw. schwenkbar aufgehängt, so daß sie um eine vertikale Achse 22 schwenkbar sind. Die Manipulatoren 13 sind im wesentlichen aus einem Gehäuse 15 und einer Zugstange 16 aufgebaut und zwischen Gehäuse 15 und Zugstange 16 befindet sich ein Federelement 17, welches bestrebt ist, die Zugstange 16 in das Gehäuse 15 hineinzuziehen. Durch Drehung des Antriebssterns 11 werden die Vorhänge 4 derart an die Seitenflächen 18 der Stückgutlage 19, die bei diesem Ausführungsbeispiel aus mehreren Gegenständen z.B. Kartons besteht, derart angelegt, daß die Vorhänge 4 unter der Kraft der Federelemente 17 an den Seitenflächen 18 anliegen. Ferner ist erkennbar, daß die Stückgutlage 19 nicht zentral unter dem Saugkasten 2 angeordnet, sondern seitlich versetzt ist. Dieser seitliche Versatz wird durch entsprechende Verschiebung der Vorhänge 4 ausgeglichen, wobei der linke Vorhang 4 weniger weit als der rechte Vorhang 4 verschoben wird.

In Figur 1 ist außerdem ein Versteifungsrahmen 25 erkennbar, dessen Unterseite von einem Lochblech 24 gebildet wird. In diesem Versteifungsrahmen 25 ist eine einen Strömungswiderstand erzeugende Einrichtung 26 eingesetzt, die an ihrer Rückseite von einem Gitterrahmen 27 gehalten wird. Die einen Strömungswiderstand darstellenden Einrichtung 26 ist bei dem in der Figur 1 dargestellten Ausführungsbeispiel ein offenporiger Schaumstoff, der in mehrere Einzelkörper 28 aufgeteilt ist. Die Einzelkörper 28 liegen nebeneinander und füllen den gesamten Innenraum des Versteifungsrahmens 25 aus. Durch geeignete Vorrichtungen kann der Schaumstoff komprimiert werden, wodurch der Strömungswiderstand auf ein gewünschtes Maß einstellbar ist. Durch die Einrichtung 26 wird der Vorteil erzielt, daß bei unter dem Lochblech 24 sich befindenden Fehlstellen, d.h. an Stellen des Lochblechs 24, an denen kein anzusaugender Gegenstand anliegt, der anzusaugenden Luft von der Einrichtung 26 ein Strömungswiderstand geboten wird, so daS über diese Fehlstellen das Vakuum im Saugkasten 2 nicht schlagartig abnimmt oder sogar zusammenbricht. Auf diese Weise können größere von Gegenständen nicht bedeckte Flächen am Lochblech 24 akzeptiert werden, da über den Strömungswiderstand der Einrichtung 26 das Vakuum im Saugkasten aufrechterhalten werden kann.

Durch den Schaumstoff, der den Strömungswiderstand vergrößert, können größere Fehlflächen in der Stückgutlage akzeptiert werden, bzw. können bei gegebenen Fehlflächen schwerere Gegenstände angehoben werden.

In der Figur 2 ist mit durchgezogenen Linien die Ausgangslage der einzelnen Elemente wiedergegeben und mit gestrichelten Linien die Arbeitslage, in der die Vorhänge 4 an den Seitenwänden 18 der Stückgutlage 19 anliegen. Außerdem ist mit strichpunktierter Linie die Achse der Palettengreiffinger 10 wiedergegeben, die in ausgeschwenkter und eingeschwenkter Lage (gestrichelt) dargestellt sind. Die Vorhänge 4 sind an einem Balken 20 aufgehängt, der mit dem Manipulator 13 und der Führungsschiene 14 in Verbindung steht. Durch Verdrehen des Antriebssterns 11 wird über den Manipulator 13 der Vorhang 4 solange in Richtung der Achse der Führungsschiene 14 verschoben, bis dieser an der Seitenfläche 18 der Stückgutlage 19 anliegt. Durch weiteres Verdrehen des Antriebssterns 11 in Richtung des Pfeils 21 wird die Zugstange 16 aus dem Gehäuse 15 herausgezogen und dabei das Federelement 7 komprimiert. Diese Federkraft wird auf den Druckbalken 20 und somit auf den Vorhang 4 übertragen, der nun mit dieser Federkraft an der Seitenfläche 18 anliegt.

Ist die Seitenfläche 18 nicht parallel zur Ausrichtung des Balkens 20, so kann sich dieser durch Verdrehen um die Achse 22 an die Schräglage der Seitenfläche 18 anpassen, so daß der Vorhang 4 wieder dichtend anliegen kann. Sind alle vier Vorhänge 4 an die Seitenflächen 18 der Stückgutlage 19 angelegt, so kann die Stückgutlage 19 von ihrer darunter sich befindenden Lage abgehoben und zentriert werden. Dabei bewegt sich die ganze Lage 19 innerhalb des Saugkastens 2 in Richtung des Pfeils 23. Eine andere Möglichkeit zur Zentrierung besteht darin, daß der Saugkasten 2 bewegt wird, und zwar entgegen der Richtung des Pfeils 23 und sich demnach bzgl. der Position der Stückgutlage 19 ausrichtet.

Vorteilhaft ist der Saugkasten 2 federnd aufgehängt, so daß auch Stückgutlagen 19 ergriffen werden können, die schräge Oberflächen aufweisen oder schräg gestapelt sind. Bevorzugt ist der zentrale Antrieb 6 ein Elektromotor, wobei jedoch auch eine pneumatische Verstellung der Vorhänge 4 möglich ist. Bei dieser Ausführungsform sind die Manipulatoren 13 als Pneumatikzylinder ausgeführt. Mittels Weg- und Winkelmeßglieder, die an den Manipulatoren 13 bzw. an den Achsen 22 vorgesehen sind, kann nach dem Anlegen der Vorhänge 4 an die Seitenflächen 18 der Stückgutlage 19 deren Position bzgl. des Saugkastens 2 ermittelt werden. Dies hat den Vorteil, daß nach dem Ergreifen der Stückgutlage 19 diese positionsgenau abgesetzt und exakt palettiert werden kann. Ferner ist die vertikale Länge der Vorhänge 4 eränderbar, so daS auch zwei oder mehr Stückgutlagen 19 angesaugt und angehoben werden können. Diese Vorhänge 4 legen sich dann an die Seitenflächen 18 der übereinander liegenden Stückgutlage 19 an. Die angesaugten Stückgutlagen 19 liegen an der einen Strömungswiderstand darstellenden Einrichtung 26 an, die z.B. als Lochblech 24 ausgebildet ist und die eine Anlagefläche bildet.

Ferner ist eine den Ansaugdruck verändernde Vorrichtung vorgesehen, über die ein auf die spezielle anzuhebende Stückgutlage 19 abgestimmter Ansaugdruck eingestellt werden kann. Hierdurch wird die Möglichkeit geschaffen, unterschiedlich schwere Stückgutlagen 19 anzuheben, ohne daß die darunterliegende Lage mit angesaugt wird. Die den Ansaugdruck verändernde Vorrichtung weist hierfür z.B. eine Speichereinheit auf, in der Daten eingegeben und abgespeichert werden können, die repräsentativ für den erforderlichen Ansaugdruck in Bezug auf die Große, das Gewicht, die Beschaffenheit usw. der anzusaugenden Stückgutlage 19 sind. Nachdem die Stückgutlage 19 z.B. mit einem geringen Ansaugdruck angesaugt und geringfügig abgehoben worden ist, kann der Ansaugdruck auf Maximalstärke erhöht werden und die Stückgutlage weiter angehoben und abtransportiert werden. Hierdurch wird die Möglichkeit geschaffen, Stückgutlagen mit oder darunter liegenden Zwischenböden, die in der Regel aus Karton bestehen, anzuheben. Außerdem besteht die Möglichkeit diese Zwischenböden auch separat zu erfassen und anzuheben. Dabei werden die Vorhänge in ihre maximal innere Stellung verlagert, der Saugkasten 2 auf den Zwischenboden abgesetzt, diese ergriffen und angehoben.

Bevorzugt weist die Erfindung einen Regelkreis für den im Greifer herrschenden Druck auf. Hierfür ist ein Druckmeßglied vorgesehen, welches den im Greifer herrschenden Druck erfaßt und abhängig von einer Druckdifferenz bezüglich eines Druckreferenzwertes eine Fehlluftklappe insbesondere über ein Proportionalventil ansteuert. Auf diese Weise wird der Greiferdruck ständig nachgeregelt.

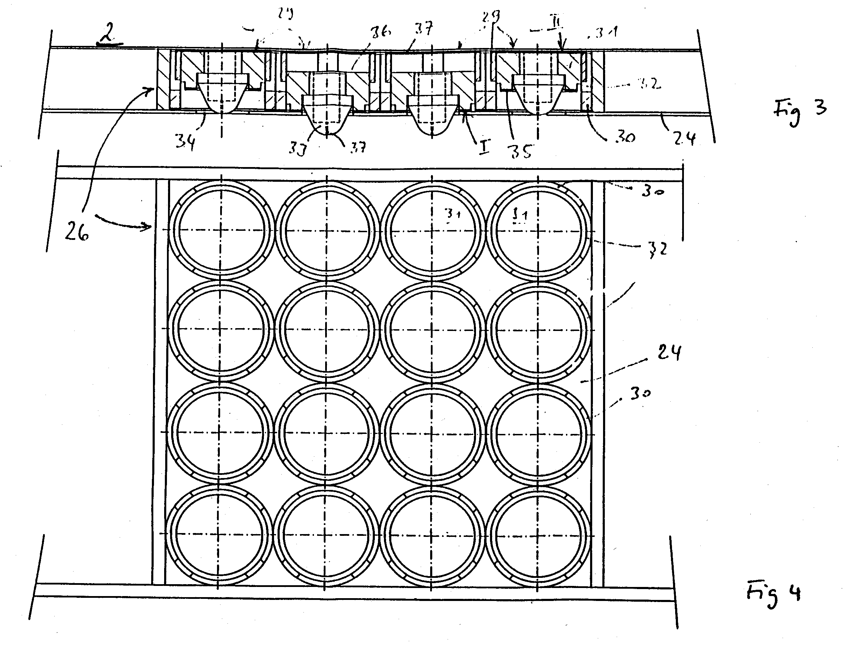

In den Figuren 3 und 4 ist eine weitere Ausführungsform der einen Strömungswiderstand darstellenden Einrichtung 26 dargestellt, die hier aus einer Vielzahl einzelner Strömungsventile 29 besteht. Ein jedes Strömungsventil 29 besteht aus einem Ventilring 30, in dem ein Ventilkolben 31 beweglich geführt ist. Der Ventilring 30 ist mit vier Überströmkanälen 32 versehen, die etwa auf halber axialer Höhe radial ins Innere des Ringes und nach oben, d.h. auf der der Lochplatte 24 gegenüberliegenden Seite axial ausmünden. Der Kolben 31 ist dabei so im Ventilring 30 angeordnet, daß er in seiner Ruhelage, die bei I dargestellt ist, den Überströmkanal 32 überdeckt und in seiner Offenstellung II, den Kanal 32 freigibt. Außerdem ist der Ventilkolben 31 mit einem Stößel 33 versehen, der das Lochblech 24 durch entsprechend große Ausnehmungen 34 durchgreift. Der Stößel 33 ragt also in der Ruhelage I des Kolbens 31 in den Aufnahmeraum für die Stückgutlage 19 (Figur 1). Wird der Saugkasten 2 auf eine Stückgutlage 19 aufgesetzt, dann werden die Stößel 33 von den anzusaugenden Gegenständen eingedrückt, wodurch der Kolben 31 den Kanal 32 freigibt und Luft über den Kanal 32 und die Durchbrüche 34 abgesaugt werden kann. Befindet sich unter ein oder mehreren Stößeln 33 kein Gegenstand, dann verbleibt der Stößel 33 in seiner ausgefahrenen Lage, so daß der Kanal 32 vom Kolben 31 verschlossen bleibt und dadurch in diesem Bereich keine Luft abgesaugt wird. Ein relativ großer Strömungsquerschnitt für die abzusaugende Luft wird dadurch erzielt, daß jedes Strömungsventil 29, bzw. jeder Ventilring 30 vier Kanäle 32 aufweist und der Kolben 31 an seiner unteren Umfangskante mit einem Rücksprung oder ggf. mit einer Fase versehen ist, wodurch der Strömungswiderstand auf ein Minimum reduziert wird. Außerdem ist der Kolben an seiner dem Lochblech 24 zugewandten Stirnseite mit einer Dichtung 35 versehen, über die in der Ruhelage I des Kolbens 31 ein Teil der Löcher des Lochblechs 24 verschlossen werden. Der hinter dem Kolben 31 sich befindende Raum 36 ist ebenfalls über eine Dichtung 37 gegenüber dem Saugkasten 2 verschlossen, so daß der Kolben 31 nicht durch das im Saugkasten 2 befindliche Vakuum angesaugt wird, ohne daß am Stößel 33 ein Gegenstand anliegt. Um sicherzustellen, daß in diesem Raum 36 der gleiche Druck herrscht wie im Bereich der Stückgutlage 19, weist der Stößel 33 eine zentrale axiale Bohrung 37 auf, die den Raum 36 mit der Umgebung verbindet.

Mit dieser in den Figuren 3 und 4 dargestellten Einrichtung 26 wird vorteilhaft das Doppellifting beim Depalettieren vermieden, d.h. es wird beim Anheben der obersten Stückgutlage verhindert, daß aus der darunterliegenden Stückgutlage einzelne Gegenstände an Stellen, wo die obere Stückgutlage Freistellen aufweist, mitgenommen werden. Durch die einzelnen Strömungsventile 29 wird der Leckluftstrom auf ein Minimum reduziert, so daß stets ein großes Vakuum aufrecht erhalten kann.

## Patentansprüche

1. Greifvorrichtung zum Greifen, insbesondere Ansaugen, und Anheben von ein oder mehrere Gegenstände umfassenden Stückgut mit einem auf das Stückgut aufsetzbaren Saugkasten (2), der mit einer Unterdruckeinrichtung verbindbar ist und der an seinen Seitenrändern luftundurchlässige Vorhänge (4) aufweist, **dadurch gekennzeichnet,** daß die Lage wenigstens eines Vorhangs (4) eines Seitenrandes horizontal und/oder vertikal veränderbar ist.

2. Greifvorrichtung nach Anspruch 1, dadurch gekennzeichnet, daß der Vorhang (4) verschiebbar und/oder drehbar und/oder schwenkbar gelagert ist.

3. Greifvorrichtung nach Anspruch 1 oder 2, dadurch gekennzeichnet, daß bei auf das zu ergreifende Stückgut aufgesetzter Greifvorrichtung (1) die Vorhänge (4) derart verlagerbar sind, daß sie sich an das Stückgut seitlich anlegen.

4. Greifvorrichtung nach einem der vorhergehenden Ansprüche, dadurch gekennzeichnet, daß über die Vorhänge (4) das Stückgut bzgl. der Greifvorrichtung (1) verlagerbar ist.

5. Greifvorrichtung nach einem der vorhergehenden Ansprüche, dadurch gekennzeichnet, daß über die Vorhänge (4) die Greifvorrichtung (1) bzgl. des Stückguts verlagerbar ist.

6. Greifvorrichtung nach einem der vorhergehenden Ansprüche, dadurch gekennzeichnet, daß der bzw. die Vorhänge (4) elektrisch oder pneumatisch verstellbar sind.

7. Greifvorrichtung nach einem der vorhergehenden Ansprüche, dadurch gekennzeichnet, daß die Vorhänge (4) unter Federkraft am Stückgut anliegen.

8. Greifvorrichtung nach einem der vorhergehenden Ansprüche, dadurch gekennzeichnet, daß dieser an einer federnden Vorrichtung aufgehängt und über diese auf das Stückgut absenk- und aufsetzbar ist.

9. Greifvorrichtung nach einem der vorhergehenden Ansprüche, dadurch gekennzeichnet, daß die Lage der Vorhänge (4) bzgl. eines Fixpunktes an der Greifvorrichtung (1) mittels Weg- und/oder Winkelmeßglieder erfaßbar ist.

10. Greifvorrichtung nach einem der vorhergehenden Ansprüche, dadurch gekennzeichnet, daß die Vorhänge (4) aus einem flexiblen oder steifen, insbesondere plattenartigen Material bestehen.

11. Greifvorrichtung nach einem der vorhergehenden Ansprüche, dadurch gekennzeichnet, daß an den Längsseiten einschwenkbare Palettengreifer (10) vorgesehen sind.

12. Greifvorrichtung nach einem der vorhergehenden Ansprüche, dadurch gekennzeichnet, daß eine den Ansaugdruck verändernde Vorrichtung, z.B. ein Bypass, eine Drosselung, oder eine Fehlluftklappe, eine Pumpendruckreduzierung o.dgl. insbesondere am Greifer oder am Vakuumgebläse vorgesehen ist.

13. Greifvorrichtung nach einem der vorhergehenden Ansprüche, dadurch gekennzeichnet, daß eine für die Anlage der angesaugten Stückgutlagen (19) dienende Vorrichtung, insbesondere ein Lochblech (24) vorgesehen ist, wobei die Löcher des Lochblechs (24) so bemessen sind, daß der Unterdruck im Unterdruckschlauch (3) aufrechterhalten bleibt.

14. Greifvorrichtung nach einem der vorhergehenden Ansprüche, dadurch gekennzeichnet, daß ein den Druck im Greifer nachregelnder Regelkreis vorgesehen ist, der insbesondere eine Fehlluftklappe, insbesondere über ein Proportionalventil ansteuert.

15. Greifvorrichtung nach einem der vorhergehenden Ansprüche, dadurch gekennzeichnet, daß im Saugkasten (2), insbesondere hinter einem auf der Stückgutlage (19) aufliegenden Lochblech (24) eine einen Strömungswiderstand darstellende Einrichtung (26) vorgesehen ist.

16. Greifvorrichtung nach Anspruch 15, dadurch gekennzeichnet, daß die Einrichtung (26) von einem offenporigen, insbesondere komprimierbaren Schaumstoff gebildet wird, der insbesondere aus mehreren nebeneinander liegenden Einzelkörpern (28) besteht.

17. Greifvorrichtung nach Anspruch 15, dadurch gekennzeichnet, daß die Einrichtung (26) von einer Vielzahl rasterartig angeordneten Strömungsventilen (29) gebildet wird, wobei jedes Strömungsventil (29) einzeln betätigbar ist.

18. Greifvorrichtung nach Anspruch 16, dadurch gekennzeichnet, daß das Strömungsventil (29) ein vom anzuhebenden Gegenstand einer Stückgutlage (19) betätigbaren Stößel (33) aufweist, der vom Gegenstand aus einer das Ventil verschließenden Ruhelage (I) in eine das Ventil öffnenden Arbeitslage (II) verlagerbar ist.

19. Verwendung der Greifvorrichtung nach einem der vorhergehenden Ansprüche in Kühlhallen zur Handhabung von tiefgekühltem Stückgut.
